# EUROPEAN PATENT APPLICATION

(11) **EP 4 322 246 A1**
(43) Date of publication of application: **14.02.2024**
(21) Application number: 22930136.1
(22) Date of filing: 17.06.2022
(51) Int. Cl.: H01M 4/131, H01M 4/1391, H01M 10/0525

(54) **MODIFIED POSITIVE ELECTRODE MATERIAL AND PREPARATION METHOD THEREFOR, POSITIVE ELECTRODE PLATE, SECONDARY BATTERY, BATTERY MODULE, BATTERY PACK, AND ELECTRIC DEVICE**

(71) Applicant: Contemporary Amperex Technology Co., Limited, Ningde, Fujian 352100 (CN)
(72) Inventor: WANG, Jing, Ningde, Fujian 352100 (CN); CHEN, Qiang, Ningde, Fujian 352100 (CN); WU, Qi, Ningde, Fujian 352100 (CN); ZHAO, Dong, Ningde, Fujian 352100 (CN); FAN, Jingpeng, Ningde, Fujian 352100 (CN); LIU, Na, Ningde, Fujian 352100 (CN)
(74) Representative: Gong, Jinping
(86) International application number: PCT/CN2022/099464
(87) International publication number: WO 2023/240598

(57) **Abstract**

The present application provides a modified positive electrode material and a preparation method thereof, as well as a positive electrode plate, a secondary battery, a battery module, a battery pack and an electrical apparatus. The modified positive electrode material includes an inner core and a cladding layer, the inner core is a positive electrode material, the cladding layer includes a polymer electrolyte body and a ferroelectric ceramic material dispersed in the polymer electrolyte body. The polymer electrolyte body forms a film-like cladding layer on the outer layer of the positive electrode material particles, which reduces the side reaction between the surface layer of the positive electrode material and the electrolyte solution, and improves storage performance; secondly, the flexible cladding layer formed by the polymer electrolyte body can inhibit the shrinkage and expansion of the positive electrode material during charging and discharging to a certain extent, thereby reducing cracking/chalking of the positive electrode material; also, the composite cladding layer has high ionic conductivity, which provides more channels for ion transport and improves the rate performance of the synthesized positive electrode material. Therefore, the above-mentioned modified positive electrode material has better structural stability, as well as improved rate performance, material storage and cycling performance.

## Description

### TECHNICAL FIELD

The present application relates to the technical field of battery, and in particular to a modified positive electrode material and a preparation method thereof, as well as a positive electrode plate, a secondary battery, a battery module, a battery pack and an electrical apparatus.

### BACKGROUND ART

Lithium-ion batteries are electrochemical energy storage systems with the highest energy density that have been applied. With the application of lithium-ion batteries in power vehicles and large-scale energy storage, the market has put forward higher requirements for their energy density and safety performance.

Starting from the composition of lithium-ion batteries, the positive electrode material accounts for a large proportion, which is about 3-4 times that of the negative electrode material. It can be seen that the performance of positive electrode materials directly affects the performance of batteries, and the development of positive electrode materials for lithium-ion batteries with higher energy density is the only way for the development of lithium-ion batteries. Since the commercialization of lithium-ion batteries in the 1990s, the energy density of lithium-ion batteries has been improved almost by increasing the content of active materials and reducing the content of inactive materials in the slurry. However, this direction has reached a bottleneck in recent years, and the proportion of active materials has been difficult to increase.

Therefore, people turn their attention to improving the initial coulombic efficiency and cycling capacity retention rate of the battery. The initial coulombic efficiency of the battery refers to the phenomenon that a layer of solid electrolyte film is formed on the surface of the electrode material during the first charging and discharging process of the battery, and a considerable part of lithium ions will be lost during the formation of the solid electrolyte film, resulting in a decrease in the capacity of the lithium battery, thereby reducing the energy density of the battery. At present, the methods that people consider to improve the initial coulombic efficiency of lithium batteries mainly include negative electrode lithium supplementation, and cladding of electrode materials with solid electrolyte film layer in advance. The process and operation of negative electrode lithium supplementation are relatively complicated, and at present, there are not many real commercialization methods. Nevertheless, cladding of material in advance is a more conventional method for material modification, which is easier to realize. Cladding the surface of the electrode material with a layer of solid electrolyte film in advance can not only prevent the reaction of the electrolyte solution during the first charging and discharging process, greatly improving the initial coulombic efficiency of the battery, but also make use of the strong controllability of the artificial solid electrolyte film to realize the optimal design of the structure. It is a promising method to improve the initial efficiency of the battery and an important direction for the modification of electrode materials in the future. The capacity retention rate of the battery during cycling is the only way to achieve high energy density. The material will continue to expand and shrink during the cycling process, resulting in cracks, causing the electrolyte solution to pass through the artificial solid electrolyte film to further react, which in turn affects the electrochemical performance of the battery such as impedance and capacity retention rate.

### SUMMARY OF THE INVENTION

The present application provides a modified positive electrode material and a preparation method thereof, as well as a positive electrode plate, a secondary battery, a battery module, a battery pack and an electrical apparatus, so as to improve the structural stability and rate performance of the positive electrode material.

A first aspect of the present application provides a modified positive electrode material, the modified positive electrode material includes an inner core and a cladding layer, the inner core is the positive electrode material, and the cladding layer includes a polymer electrolyte body and a ferroelectric ceramic material dispersed in the polymer electrolyte body.

In the modified positive electrode material, the polymer electrolyte body forms a film-like cladding layer on the outer layer of the positive electrode material particles, which reduces the side reaction between the surface layer of the positive electrode material and the electrolyte solution, hinders the dissolution of the positive electrode material, and improves storage performance; secondly, the flexible cladding layer formed by the polymer electrolyte body can inhibit the shrinkage and expansion of the positive electrode material during charging and discharging to a certain extent, thereby reducing cracking/chalking of the positive electrode material; also, the composite cladding layer including the polymer electrolyte and the ferroelectric ceramic material has high ionic conductivity, which provides more channels for ion transport and improves the rate performance of the synthesized positive electrode material. In summary, the modified positive electrode material of the present application has better structural stability, as well as improved rate performance, material storage and cycling performance.

In any embodiment of the first aspect, the mass of the cladding layer is 0.5wt%-5wt% of the mass of the modified positive electrode material, so as to achieve full and complete cladding of the positive electrode material as far as possible. Optionally, the mass content of the ferroelectric ceramic material in the cladding layer is 2%-10%, further optionally 2%-5%, so as to further improve the ionic conductivity of the polymer electrolyte by using the ferroelectric ceramic material.

In any embodiment of the first aspect, the ionic diffusion coefficient D_{(Li+)} of the modified positive electrode material is 10⁻¹¹-10⁻¹⁰ S/cm², so as to further optimize the rate performance of the modified positive electrode material. In any embodiment of the first aspect, optionally, the polymer electrolyte body is one or more selected from the group consisting of polyethylene oxide (PEO), polyethylene glycol (PEG), polymethyl methacrylate (PMMA), polyacrylonitrile (PAN), polyvinylidene fluoride (PVDF), vinylidene fluoride-trifluoroethylene copolymer (PVDF-TrFE copolymer), vinylidene fluoride-hexafluoropropylene copolymer (PVDF-HFP copolymer), vinylidene fluoride-chlorotrifluoroethylene copolymer (PVDF-CTFE copolymer). All the above-mentioned materials are obtained by drying existing materials, and the cost is relatively low.

In any embodiment of the first aspect, the weight average molecular weight of the above-mentioned polymer electrolyte body is 1500-80000, so as to form a cladding layer with better mechanical properties.

In any embodiment of the first aspect, the above-mentioned ferroelectric ceramic material has the general formula: XYO₃, where X is one or more selecting from the group consisting of Li⁺, Na⁺, K⁺, Mg²⁺, Ca²⁺, Sr²⁺, Pb²⁺, Ba²⁺ and La²⁺, Y is one or more selecting from the group consisting of Ti⁴⁺, Zr⁴⁺, V⁵⁺, Nb⁵⁺ and Ta²⁺; optionally, X is one or more selecting from the group consisting of Li⁺, Sr²⁺, Pb²⁺ and Ba²⁺, and Y is Ti⁴⁺ and/or Nb⁵⁺. The above-mentioned ferroelectric ceramic materials are materials known in the art, with good chemical stability and good polarization performance.

In any embodiment of the first aspect, the D_{V50} particle size of the ferroelectric ceramic material is 5 nm - 100 nm, and optionally the D_{V50} particle size of the ferroelectric ceramic material is 5 nm - 60 nm. The use of nano-scale ferroelectric ceramic materials, on the one hand, is conducive to the attachment of ferroelectric ceramic materials on the surface of the positive electrode material; on the other hand, it is conducive to the dispersion of ferroelectric ceramic materials in the chain segment gap of the polymer electrolyte, thereby more effectively reducing the crystallinity of the polymer electrolyte and improving its ionic conductivity.

In any embodiment of the first aspect, the thickness of the cladding layer is 2 nm - 40 nm. The cladding layer in this thickness range can not only repeatedly realize the protection of the positive electrode material, effectively avoid surface side reactions, but also avoid the increase in impedance caused by a too thick cladding layer.

In any embodiment of the first aspect, optionally, the D_{V50} particle size of the modified positive electrode material is 2 µm to 10 µm. It is beneficial for the material to exert a better gram capacity, resulting in better cycling performance of the battery using the material.

In any embodiment of the first aspect, the positive electrode material is any one or more selecting from the group consisting of layered positive electrode materials, lithium-rich manganese-based positive electrode materials, spinel positive electrode materials, and conversion positive electrode materials.

All the above-mentioned types of positive electrode materials are commonly used positive electrode materials in the art. After being cladded with the above-mentioned cladding layer, their storage stability, structural stability and rate performance can all be improved.

In any embodiment of the first aspect, the phase state of the positive electrode material is O-3 phase, so that the modified positive electrode material has a higher capacity.

A second aspect of the present application provides a preparation method of any one of the above-mentioned modified positive electrode materials, the preparation method comprising: step S1, preparing a solution of a polymer electrolyte; step S2, mixing a ferroelectric ceramic material with a positive electrode material to obtain a positive electrode material coated with the ferroelectric ceramic material; and step S3, mixing and drying the solution of the polymer electrolyte and the positive electrode material coated with the ferroelectric ceramic material to obtain a modified positive electrode material.

In the preparation method of the present application, first, the ferroelectric ceramic material is dispersed on the surface of the positive electrode material to form the positive electrode material cladded with the ferroelectric ceramic material, which is then mixed with a liquid polymer electrolyte; after drying, the polymer electrolyte is connected to form a film, thereby forming a cladding layer on the positive electrode material. The above-mentioned preparation method is simple in operation and easy for industrial popularization and application.

In any embodiment of the second aspect, the mass sum of the above-mentioned polymer electrolyte, positive electrode material and ferroelectric ceramic material is W1, the mass of the polymer electrolyte is W2, the mass of the ferroelectric ceramic material is W3, and W2/W1 is between 0.5wt% and 5wt% to achieve full and complete cladding of the positive electrode material as far as possible; optionally, W3/(W2+W3) is between 2% and 10%, optionally between 2% and 5%, so as to further improve the ionic conductivity of the polymer electrolyte by using the ferroelectric ceramic material. Optionally, the above-mentioned polymer electrolyte is one or more selected from the group consisting of polyethylene oxide (PEO), polyethylene glycol (PEG), polymethyl methacrylate (PMMA), polyacrylonitrile (PAN), polyvinylidene fluoride (PVDF), vinylidene fluoride-trifluoroethylene copolymer (PVDF-TrFE copolymer), vinylidene fluoride-hexafluoropropylene copolymer (PVDF-HFP copolymer), vinylidene fluoride-chlorotrifluoroethylene copolymer (PVDF-CTFE copolymer).

In any embodiment of the second aspect, the mass content of the polymer electrolyte in the polymer electrolyte solution is 0.5%-10%, so as to facilitate the dispersion of the positive electrode material cladded with the ferroelectric ceramic material therein, thereby realizing the ideal mixing effect of the two. Optionally, the solvent used for the solution of the polymer electrolyte is one or more selected from the group consisting of absolute ethanol, N-methylpyrrolidone (NMP), and N,N-dimethylformamide (DMF). The above-mentioned solvents have high solubility to the polymer electrolyte and are easy to remove during the drying process.

In any embodiment of the second aspect, the drying in the above-mentioned step S3 is spray drying. Optionally, the air inlet temperature of the spray drying is 130°C-220°C, and the air outlet temperature of the spray drying is 60°C-100°C. Thus, a micron-sized modified positive electrode material with relatively uniform particle size distribution can be obtained.

A third aspect of the present application provides a positive electrode plate including a positive electrode current collector and a positive electrode film layer provided on at least one surface of the positive electrode current collector. The positive electrode film layer includes a positive electrode active material, and the positive electrode active material includes any one of the above-mentioned modified positive electrode materials. Since the modified positive electrode material of the present application has better structural stability, as well as improved rate performance, material storage and cycling performance, the positive electrode plate with it also has the above advantages.

In any embodiment of the third aspect, optionally, based on the total weight of the positive electrode film layer, the content of the modified positive electrode material in the positive electrode film layer is more than 90% by weight, optionally 95% to 98% by weight. It gives full play to the advantages of the modified positive electrode material of the present application.

A fourth aspect of the present application provides a secondary battery, which includes any one of the modified positive electrode materials of the first aspect or the positive electrode plate of the third aspect.

A fifth aspect of the present application provides a battery module comprising the secondary battery according to the fourth aspect.

A sixth aspect of the present application provides a battery pack including the battery module according to the fifth aspect.

A seventh aspect of the present application provides an electrical apparatus comprising the secondary battery of the fourth aspect, the battery module of the fifth aspect, or the battery pack of the sixth aspect.

The characteristics of the modified positive electrode material of the present application make the secondary battery, battery module, and battery pack with it have higher rate performance and cycling performance, thereby providing higher power cycle stability for the electrical apparatus with the secondary battery, battery module, or battery pack of the present application.

### DESCRIPTION OF DRAWINGS

In order to illustrate the technical solutions of the embodiments of the present application more clearly, the following briefly introduces the drawings required in the embodiments of the present application. Obviously, the drawings described below are only some Embodiments of the present application. For those of ordinary skill in the art, other drawings can also be obtained according to the drawings without any creative effort.
Fig. 1 is an Scanning Electron Microscopy image of the positive electrode material of Comparative Embodiment 1.
Fig. 2 is an Scanning Electron Microscopy image of the cladded positive electrode material obtained in Comparative Embodiment 3.
Fig. 3 is an Scanning Electron Microscopy image of the cladded positive electrode material obtained in Embodiment 9.
Fig. 4 is an Scanning Electron Microscopy image of the cladded positive electrode material obtained in Embodiment 1.
Fig. 5 is an Scanning Electron Microscopy image of the cladded positive electrode material obtained in Embodiment 4.
Fig. 6 is a schematic diagram of a secondary battery according to an embodiment of the present application.
Fig. 7 is an exploded diagram of the secondary battery according to an embodiment of the present application as shown in Fig. 6.
Fig. 8 is a schematic diagram of a battery module according to an embodiment of the present application.
Fig. 9 is a schematic diagram of a battery pack according to an embodiment of the present application.
Fig. 10 is an exploded diagram of the battery pack according to an embodiment of the present application shown in Fig. 9.
Fig. 11 is a schematic diagram of an electrical apparatus according to an embodiment of the present application in which a secondary battery is used as a power source.

In the drawings, the drawings are not drawn to actual scale.

### Description of reference numerals:

1 battery pack; 2 upper box body; 3 lower box body; 4 battery module; 5 secondary battery; 51 case; 52 electrode assembly; 53 top cover assembly.

### DETAILED DESCRIPTION

The implementations of the present application are further described in detail below with reference to the drawings and embodiments. The following detailed description of the embodiments and the drawings are used to illustrate the principles of the present application by way of example, but should not be used to limit the scope of the present application, that is, the present application is not limited to the described embodiments.

Hereinafter, embodiments that specifically disclose a modified positive electrode material and a preparation method thereof, as well as a positive electrode plate, a secondary battery, a battery module, a battery pack, and an electrical apparatus of the present application will be described in detail with reference to the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless otherwise stated, the numerical range "a-b" means the abbreviated representation of any combination of real numbers between a and b, where a and b are both real numbers. For example, the value range "0-5" means that all real numbers between "0 and 5" have been listed herein, and "0-5" is just an abbreviated representation of the combinations of these values. Additionally, when it is stated that a certain parameter is an integer of ≥2, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the "including" and "comprising" mentioned in the present application mean open-ended, or may be closed-ended. For example, the "including" and "comprising" may indicate that it is possible to include or comprise other components not listed, and it is also possible to include or comprise the only listed components.

If not specifically stated, the term "or" is inclusive in the present application. By way of example, the phrase "A or B" means "A, B, or both A and B". More particularly, the condition "A or B" is satisfied by any one of the following conditions: A is true (or present) and B is false (or absent); A is false (or absent) and B is true (or present); or both A and B are true (or present).

### [Secondary battery]

Secondary batteries, also known as rechargeable batteries or storage batteries, refer to batteries that, after being discharged, can activate active materials by charging for continuous use.

Generally, the secondary battery includes a positive electrode plate, a negative electrode plate, a separator and an electrolyte solution. During charging and discharging of the battery, active ions (such as lithium ions) are intercalated and deintercalated back and forth between the positive electrode plate and the negative electrode plate. The separator is provided between the positive electrode plate and the negative electrode plate, and mainly functions to prevent a short circuit between the positive electrode and the negative electrode while allowing active ions to pass through. The electrolyte solution mainly serves to conduct active ions between the positive electrode plate and the negative electrode plate.

An embodiment of the present application provides a modified positive electrode material, the modified positive electrode material includes an inner core and a cladding layer, the inner core is the positive electrode material, and the cladding layer includes a polymer electrolyte body and a ferroelectric ceramic material dispersed in the polymer electrolyte body.

In the above-mentioned modified positive electrode material, the polymer electrolyte body forms a film-like cladding layer on the outer layer of the positive electrode material particles, which reduces the side reaction between the surface layer of the positive electrode material and the electrolyte solution, hinders the dissolution of the positive electrode material, and improves storage performance; secondly, the flexible cladding layer formed by the polymer electrolyte body can inhibit the shrinkage and expansion of the positive electrode material during charging and discharging to a certain extent, thereby reducing cracking/chalking of the positive electrode material; also, the ferroelectric ceramic filler has stronger Lewis acid-base effect with the electrolyte polymer electrolyte because of its permanent polarization, thus reducing the crystallinity of the polymer electrolyte, improving its ionic conductivity, providing more channels for ion transport, and improving the rate performance of the synthesized positive electrode material. In summary, the modified positive electrode material of the present application has better structural stability, as well as improved rate performance, material storage and cycling performance.

In some embodiments, the mass of the above-mentioned cladding layer is 0.5wt%-5wt% of the mass of the modified positive electrode material, which not only avoids the influence of excessive content of the cladding layer on the positive electrode material itself, but also can achieve full and complete cladding on the positive electrode material as far as possible.

The ferroelectric ceramic material can reduce the crystallinity of the polymer electrolyte, but the excessive use of the ferroelectric ceramic material leads to a decrease in the mechanical buffering capacity of the cladding layer, resulting in weakened ability to reduce cracking/chalking of the positive electrode material. If the amount of the ferroelectric ceramic material is too small, the effect of improving the ionic conductivity of the electrolyte polymer is not obvious. In some embodiments, the mass content of the ferroelectric ceramic material in the cladding layer is 2% to 10%, and further 2% to 7%, so as to further improve the ionic conductivity of the polymer electrolyte by using the ferroelectric ceramic material and make the cladding layer have sufficient mechanical buffering capacity.

The ionic conductivity of conventional polymer electrolytes is 10⁻⁴ S/cm or below, for example, 10⁻⁴-10⁻⁸ S/cm. Although the cladding layer of the present application is mainly composed of the polymer electrolyte, after being modified with the ferroelectric ceramic material, the ionic conductivity of the polymer electrolyte is improved, thereby increasing the ionic diffusion coefficient of the modified positive electrode material. The ionic diffusion coefficient D_{(Li+)} of the modified positive electrode material is 10⁻¹¹-10⁻¹⁰ S/cm², which can be further optimize the rate performance of the modified positive electrode material. The ionic diffusion coefficient of the above-mentioned modified positive electrode material can be detected by the following method:

The ionic diffusion coefficient is detected by the AC impedance method. For example, a CHI604D impedance analyzer is used, the amplitude voltage is set to 5 mV, the frequency range is 10⁻²-10⁵ Hz, and the charge transfer impedance after 300 cycles at room temperature is tested. The lithium ionic diffusion coefficient (D_{(Li+)} ) is calculated by the following formula: D_{(Li+)}=RT/nFR_{ct}, where Rct is the charge transfer impedance, F is the Faraday resistance constant, T is the absolute temperature, and n is the number of electrons gained or lost, and R is the gas constant.

The polymer electrolyte used to form the polymer electrolyte body of the present application can be a polymer commonly defined in the art as an electrolyte. In some embodiments, the polymer electrolyte body is one or more selected from the group consisting of polyethylene oxide, polyethylene glycol, polymethyl methacrylate, polyacrylonitrile, polyvinylidene fluoride, vinylidene fluoride-trifluoroethylene copolymer (PVDF-TrFE copolymer), vinylidene fluoride-hexafluoropropylene copolymer (PVDF-HFP copolymer), and vinylidene fluoride-chlorotrifluoroethylene copolymer (PVDF-CTFE copolymer). The above-mentioned materials are all existing materials, such as known modified or unmodified corresponding polymers, and the specific materials will not be described one by one in the present application.

In order to form a cladding layer with better mechanical performance, in some embodiments, the weight average molecular weight of the above-mentioned polymer electrolyte body is 1500 to 800000. When the weight average molecular weight of the polymer electrolyte body is lower than 1500, the formed cladding layer has poor cladding properties on the positive electrode material, and it is easy to lose during cycling; when the E weight average molecular weight of the polymer electrolyte is higher than 800000, the formed cladding layer has poor flexibility.

The ferroelectric ceramic materials used in the present application can be selected from known ferroelectric ceramic materials. In some embodiments, the above-mentioned ferroelectric ceramic material has the general formula: XYO₃, where X is one or more selecting from the group consisting of Li⁺, Na⁺, K⁺, Mg²⁺, Ca²⁺, Sr²⁺, Pb²⁺, Ba²⁺ and La²⁺, Y is one or more selecting from the group consisting of Ti⁴⁺, Zr⁴⁺, V⁵⁺, Nb⁵⁺ and Ta²⁺; optionally, X is one or more selecting from the group consisting of Li⁺, Sr²⁺, Pb²⁺ and Ba²⁺, and Y is Ti⁴⁺ and/or Nb⁵⁺. The above-mentioned ferroelectric ceramic materials are materials known in the art, with good chemical stability and good polarization performance.

In some embodiments, the D_{V50} particle size of the ferroelectric ceramic material is 5 nm - 100 nm, and optionally the D_{V50} particle size of the ferroelectric ceramic material is 5 nm - 60 nm. The use of nano-scale ferroelectric ceramic materials, on the one hand, is conducive to the attachment of ferroelectric ceramic materials on the surface of the positive electrode material; on the other hand, it is conducive to the dispersion of ferroelectric ceramic materials in the chain segment gap of the polymer electrolyte, thereby more effectively reducing the crystallinity of the polymer electrolyte and improving its ionic conductivity.

The cladding layer of the present application can protect the positive electrode material and improve the rate performance at the same time. In some embodiments, the thickness of the above-mentioned cladding layer is 2 nm - 40 nm. The cladding layer in this thickness range can not only repeatedly realize the protection of the positive electrode material, effectively avoid surface side reactions, but also avoid the increase of impedance caused by a too thick cladding layer.

In some embodiments, the D_{V50} particle size of the above-mentioned modified positive electrode material is 1 µm - 10 µm. It is beneficial for the material to exert a better gram capacity, resulting in better cycling performance of the battery using the material.

In any embodiment of the first aspect, the positive electrode material is any one or more selecting from the group consisting of layered positive electrode materials, lithium-rich manganese-based positive electrode materials, spinel positive electrode materials, and conversion positive electrode materials. All the above-mentioned types of positive electrode materials are commonly used positive electrode materials in the art. After being cladded with the above-mentioned cladding layer, their storage stability, structural stability and rate performance can all be improved. The above-mentioned layered positive electrode material can be lithium cobaltate, nickel-cobalt-manganese ternary materials, etc., such as NCM111, NCM523, NCM622, NCM715, NCM811, NCM9655, NCM9631, NCA and corresponding various materials modified by doping or cladding. For high-nickel ternary materials, the cladding layer also plays a role in reducing the content of impurity lithium on the surface; the above-mentioned lithium-rich manganese-based positive electrode materials can be any one of lithium-rich lithium manganate Li₂MnO₃, Li[Li_{1/3}Mn_{2/3}]O₂ or xLiMO₂·(1-x) Li[Li_{1/3}Mn_{2/3}]O₂ (0<x<1), etc., and corresponding various materials modified by doping or cladding; the spinel positive electrode material can be lithium manganate with spinel structure LiMn₂O₄, doped lithium manganate with spinel structure LiMn₂₋ₓMₓO₄ (0 <x<2, M is Ni, V, Cr, Cu, Co or Fe, etc.); the conversion positive electrode material is selected from MXₘ, where M=Ti, V, Cr, Mn, Fe, Co, Ni, Cu, etc.; X=F, Cl, O, S, N, P, etc., m makes the valence of MXₘ be 0. Each of the above positive electrode materials may be monocrystalline or polycrystalline, preferably polycrystalline.

In some embodiments, the phase state of the positive electrode material is O-3 phase, so that the modified positive electrode material has a higher capacity.

Another embodiment of the present application provides a preparation method of any one of the above-mentioned modified positive electrode materials, the preparation method comprising: step S1, preparing a solution of a polymer electrolyte; step S2, mixing a ferroelectric ceramic material with a positive electrode material to obtain a positive electrode material coated with the ferroelectric ceramic material; step S3, mixing and drying the solution of the polymer electrolyte and the positive electrode material coated with the ferroelectric ceramic material to obtain a modified positive electrode material.

In the preparation method of the present application, first, the ferroelectric ceramic material is dispersed on the surface of the positive electrode material to form the positive electrode material cladded with the ferroelectric ceramic material, which is then mixed with a liquid polymer electrolyte; after drying, the polymer electrolyte is connected to form a film, thereby forming a cladding layer on the positive electrode material. The above-mentioned preparation method is simple in operation and easy for industrial popularization and application.

In the preparation process, the losses of the polymer electrolyte, positive electrode material and ferroelectric ceramic material are not considered. In some embodiments, the mass sum of the above-mentioned polymer electrolyte, positive electrode material and ferroelectric ceramic material is W1, the mass of the polymer electrolyte is W2, the mass of the ferroelectric ceramic material is W3, and (W2+W3)/W1 is between 0.5wt% and 5wt% to achieve full and complete cladding of the positive electrode material as far as possible; optionally, W3/(W2+W3) is between 2% and 10%, optionally between 2% and 7%, so as to further improve the ionic conductivity of the polymer electrolyte by using the ferroelectric ceramic material.

The above-mentioned polymer electrolyte can be a polymer commonly defined in the art as an electrolyte. In some embodiments, the polymer electrolyte body is one or more selected from the group consisting of polyethylene oxide, polyethylene glycol, polymethyl methacrylate, polyacrylonitrile, polyvinylidene fluoride, vinylidene fluoride-trifluoroethylene copolymer (PVDF-TrFE copolymer), vinylidene fluoride-hexafluoropropylene copolymer (PVDF-HFP copolymer), and vinylidene fluoride-chlorotrifluoroethylene copolymer (PVDF-CTFE copolymer). The above-mentioned materials are all existing materials, such as known modified or unmodified corresponding polymers, and the specific materials will not be described one by one in the present application.

In the present application, in order to fully mix the polymer electrolyte, positive electrode material and ferroelectric ceramic material to dissolve the polymer electrolyte in a solvent to form a solution, in some embodiments, the mass content of the polymer electrolyte in the above-mentioned solution of the polymer electrolyte is 0.5%-10%, so as to facilitate the dispersion of the positive electrode material cladded with the ferroelectric ceramic material therein, thereby realizing the ideal mixing effect of the two. In order to reduce the E amount of the solvent used to dissolve the polymer electrolyte as much as possible to facilitate the removal of the solvent, in some embodiments, the solvent used for the solution of the polymer electrolyte is one or more selected from the group consisting of absolute ethanol, N-methylpyrrolidone (NMP), and N,N-dimethylformamide (DMF). The above-mentioned solvents have high solubility to the polymer electrolyte and are easy to remove during the drying process.

The drying in the above step S3 can be vacuum drying, hot air drying or spray drying. When vacuum drying or hot air drying is selected, further crushing is carried out after drying to control its particle size. In some embodiments, the drying in the above step S3 is spray drying. In order to improve the efficiency of spray drying and control the particle size of the modified positive electrode material obtained by spray drying, in some embodiments, the air inlet temperature of spray drying is controlled to be 130°C-220°C, and the air outlet temperature of spray drying is controlled to be 60°C-100°C. Thus, a micron-sized modified positive electrode material with relatively uniform particle size distribution and D_{V50} particle size of 1-10 µm can be obtained.

### [Positive electrode plate]

The positive electrode plate typically includes a positive electrode current collector and a positive electrode film layer provided on at least one surface of the positive electrode current collector, and the positive electrode active material includes any one of the above-mentioned modified positive electrode materials. Since the modified positive electrode material of the present application has better structural stability, as well as improved rate performance, material storage and cycling performance, the positive electrode plate with it also has the above advantages.

As an example, the positive electrode current collector has two opposite surfaces in its own thickness direction, and the positive electrode film layer is arranged on either or both of the two opposite surfaces of the positive electrode current collector.

In some embodiments, the positive electrode current collector can be a metal foil or a composite current collector. For example, an aluminum foil can be used as the metal foil. The composite current collector may include a high molecular material substrate layer and a metal layer formed on at least one surface of the high molecular material substrate layer. The composite current collector can be formed by forming a metal material (aluminum, aluminum alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the positive electrode active material may also be a positive electrode active material for batteries well known in the art. As an example, the positive electrode active material may include at least one of the following materials: lithium-containing phosphate with olivine structure, lithium transition metal oxide, and their respective modified compounds. However, the present application is not limited to these materials, and other conventional materials useful as positive electrode active materials for batteries can also be used. These positive electrode active materials may be used alone or in combination of two or more thereof. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds. Examples of the lithium-containing phosphate with olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium manganese iron phosphate, and lithium manganese iron phosphate-carbon composite.

In some embodiments, the positive electrode film layer further optionally comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally comprises a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate can be prepared by dispersing the components for preparing the positive electrode plate, for example, the positive electrode active material, the conductive agent, the binder and any other components in a solvent (for example, N-methyl pyrrolidone) to form a positive electrode slurry; and coating the positive electrode slurry on a positive electrode current collector, followed by oven drying, cold pressing and other procedures, to obtain the positive electrode plate.

### [Negative electrode plate]

The negative electrode plate includes a negative electrode current collector and a negative electrode film layer arranged on at least one surface of the negative electrode current collector, and the negative electrode film layer includes a negative electrode active material.

As an example, the negative electrode current collector has two opposite surfaces in its own thickness direction, and the negative electrode film layer is provided on either one or both of the two opposite surfaces of the negative electrode current collector.

In some embodiments, the negative electrode current collector can be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, a negative electrode active material for the battery well known in the art can be used as the negative electrode active material. As an example, the negative electrode active material may include at least one of artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be at least one selected from elemental tin, a tin-oxygen compound, and a tin alloy. However, the present application is not limited to these materials, and other conventional materials useful as negative electrode active materials for batteries can also be used. These negative electrode active materials may be used alone or in combination of two or more thereof.

In some embodiments, the negative electrode film layer further optionally comprises a binder. As an example, the binder may be selected from at least one of polyvinylidene fluoride (PVDF), styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally comprises a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally comprise other auxiliaries, for example, a thickener (e. g., sodium carboxymethyl cellulose (CMC-Na)) and the like.

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid state, a gel state, or an all-solid state.

In some embodiments, the electrolyte is in a liquid state, and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, methylsulfonylmethane, ethyl methyl sulfone and ethyl sulfonyl ethane.

In some embodiments, the electrolyte solution further optionally comprises an additive. As an example, the additive may include a negative electrode film-forming additive, positive electrode film-forming additive, and may also include additives that can improve certain battery properties, such as additives that improve battery overcharge performance, additives that improve battery high or low temperature performance, and the like.

### [Separator]

In some embodiments, the secondary battery also comprises a separator. The type of the separator is not particularly limited in the present application, and any well-known separator with a porous structure having good chemical stability and mechanical stability may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some embodiments, the positive electrode plate, the negative electrode plate, and the separator can be made into an electrode assembly by a winding process or a stacking process.

In some embodiments, the secondary battery may include an outer package. The outer package can be used to encapsulate the above-mentioned electrode assembly and electrolyte.

In some embodiments, the outer package of the secondary battery may be a hard shell, e.g., a hard plastic shell, an aluminum shell, a steel shell, etc. The outer package of the secondary battery may also be a soft pack, such as a bag-type soft pack. The material of the soft package can be plastic, and as plastic, polypropylene, polybutylene terephthalate, and polybutylene succinate can be enumerated.

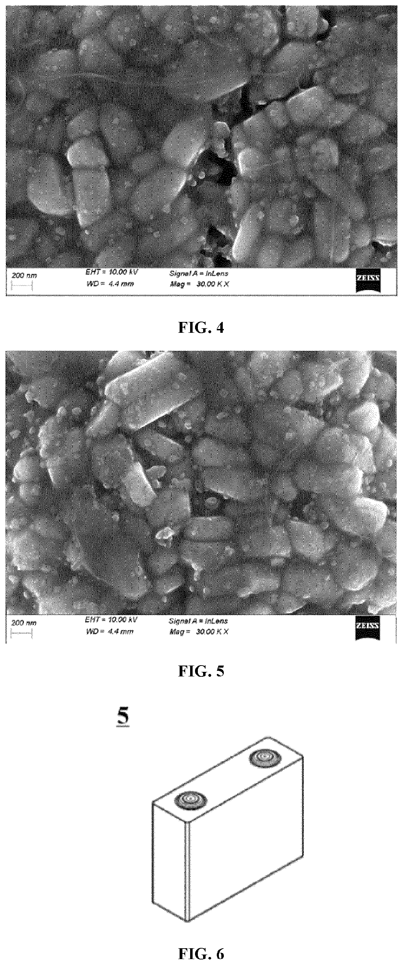

The present application has no particular limitation on the shape of the secondary battery, which can be cylindrical, square or any other shape. For example, Fig. 6 is an example of a secondary battery 5 having a square structure.

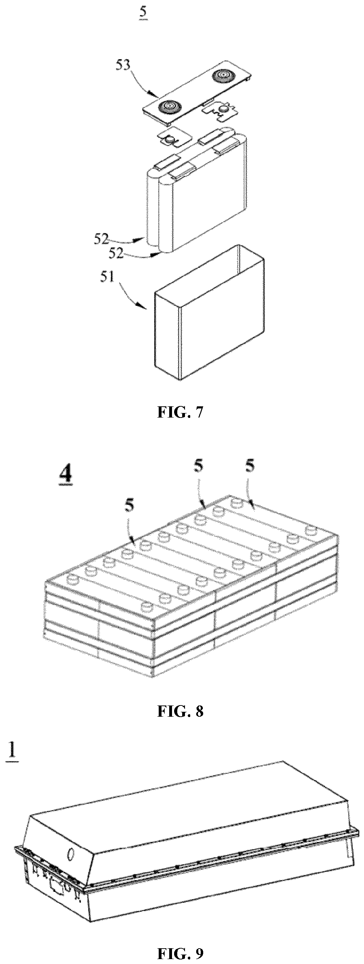

In some embodiments, referring to Fig. 7, the outer package can include a case 51 and a cover plate 53. Here, the case 51 can include a bottom plate and a side plate connected to the bottom plate, with the bottom plate and the side plate enclosing to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, which can be selected by those skilled in the art according to specific actual requirements.

In some embodiments, the secondary batteries may be assembled into a battery module, and the number of the secondary batteries included in the battery module may be one or more, and the specific number may be selected by those skilled in the art according to the application and capacity of the battery module.

Fig. 8 is an example of a battery module 4. Referring to Fig. 8, in the battery module 4, a plurality of secondary batteries 5 can be sequentially arranged along the length direction of the battery module 4. Of course, any other arrangement is also possible. The plurality of secondary batteries 5 may further be fixed by fasteners.

Optionally, the battery module 4 can further include a shell having an accommodating space, in which the plurality of secondary batteries 5 are accommodated.

In some embodiments, the battery module may further be assembled into a battery pack, the number of battery module contained in the battery pack may be one or more, and the specific number can be selected by those skilled in the art according to the use and capacity of the battery pack.

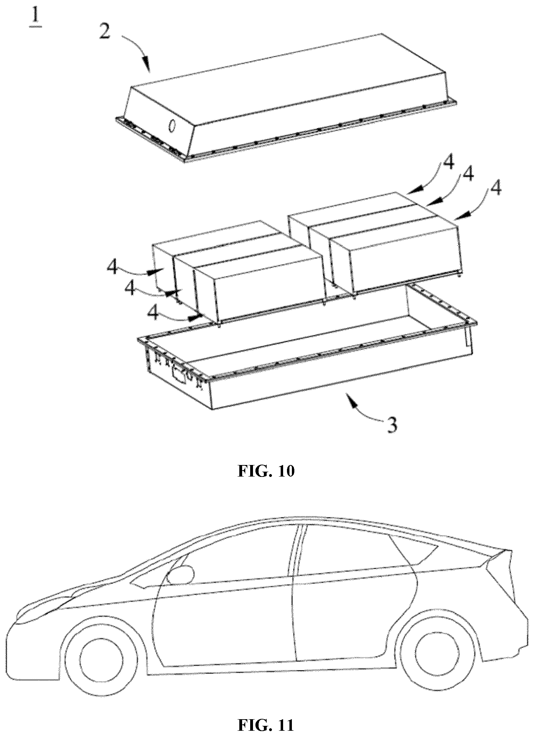

Figs. 9 and 10 are an example of a battery pack 1. Referring to Fig. 9 and Fig. 10, the battery pack 1 may comprise a battery box and a plurality of battery modules 4 arranged in the battery box. The battery box includes an upper box body 2 and a lower box body 3, where the upper box body 2 can cover the lower box body 3 and forms an enclosed space for accommodating the battery module 4. The plurality of battery modules 4 may be arranged in the battery box in any manner.

In addition, the present application further provides an electrical apparatus, and the electrical apparatus includes at least one of the secondary batteries, the battery module or the battery pack provided in the present application. The secondary battery, battery module, or battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack can be selected according to the requirements during use.

Fig. 11 is an example of an electrical apparatus. The electrical apparatus is an all-electric vehicle, a hybrid electric vehicle or a plug-in hybrid electric vehicle, and the like. In order to meet the requirements of the electrical apparatus for high power and high energy density of secondary batteries, a battery pack or a battery module may be used.

### [Embodiments]

Embodiments of the present application will be described hereinafter. The Embodiments described below are exemplary and only used to explain the present application, and are not to be construed as limiting the present application. Where specific techniques or conditions are not specified in the Embodiments, the techniques or conditions described in the literature of the art or the product specifications are followed. All of the used agents or instruments which are not specified with the manufacturer are conventional commercially-available products.

The sources and main properties of the polymer electrolytes used in the Embodiments are as follows.

| Material | Source | Weight average molecular weight | Ionic conductivity at room temperature |
|---|---|---|---|
| Polyethylene oxide (PEO) | Aladdin, CAS No.: 68441-17-8 | 600000 | 10⁻⁷ |
| Polyethylene glycol (PEG) | Aladdin, CAS No.: 25322-68-3 | 6000 | 10⁻⁷ |
| Polymethyl methacrylate (PMMA) | Aladdin, CAS No.: 9011-14-7 | 10000 | 10⁻⁴ |
| Polyacrylonitrile (PAN) | Aladdin, CAS No.: 25014-41-9 | 149000-151000 | 10⁻⁴ |
| Polyvinylidene fluoride (PVDF) | Changshu Arkema, Item No.: PVDF628 | 15000 | 10⁻⁵ |
| Vinylidene fluoride-trifluoroethylene copolymer | Sigma-Aldrich, CAS No.: 28960-88-5 | 800000 | 10⁻⁵ |
| Vinylidene fluoride-hexafluoropropylene copolymer | Johnlong, CAS No.: 9011-17-0 | 400000 | 10⁻⁵ |
| Vinylidene fluoride-chlorotrifluoroethylene copolymer | Changshu Xinhua Chemical Co., Ltd., CB No.: CB31147435 | 300000 | 10⁻⁵ |

### Comparative Embodiment 1

NCM811 bare positive electrode material, with D_{V50} of about 9 µm.

### Comparative Embodiment 2

A PVDF-HFP/NMP solution was formulated with a concentration of 2w/v%, the bare NCM811 positive electrode material was added into the PVDF-HFP/NMP solution, with a solid-liquid mass volume ratio of 1:1. The mixture was well mixed and then subjected to spray drying (air inlet temperature: 180°C, and air outlet temperature: 80°C) to obtain a PVDF-HFP-cladded positive electrode material. The cladding layer accounted for 2wt%.

### Comparative Embodiment 3

BaTiO₃ was dry mixed with the NCM811 positive electrode material at a concentration of 5000 ppm to obtain a BaTiO₃₋cladded NCM811 positive electrode material, and the mass proportion of the cladding layer to the whole material was 0.5wt%.

### Comparative Embodiment 4

A PVDF-HFP/NMP solution was formulated according to a concentration of 1w/v%, Al₂O₃ was blended with the bare NCM811 positive electrode material at a concentration of 700 ppm to form an Al₂O₃-cladded NCM811 material. The Al₂O₃-cladded NCM811 material was added into the PVDF-HFP/NMP solution with a solid-to-liquid ratio of 1:1, stirred evenly and then spray-dried (air inlet temperature 180°C, air outlet temperature 80°C) to obtain an Al₂O₃/PVDF-HFP-cladded NCM811 positive electrode material. The mass proportion of the cladding layer to the whole material was 1wt%, and the mass proportion of the filler to the whole cladding layer was 7wt%.

### Embodiment 1

A PVDF-HFP/NMP solution was formulated according to a concentration of 1w/v%, BaTiO₃ was blended with the bare NCM811 positive electrode material at a concentration of 700 ppm to form a BaTiO₃-cladded NCM811 material. The BaTiO₃-cladded NCM811 material was added into the PVDF-HFP solution with a solid-to-liquid mass volume ratio of 1:1, stirred evenly and then spray-dried (air inlet temperature 180°C, air outlet temperature 80°C) to obtain a BaTiO₃/PVDF-HFP-cladded NCM811 positive electrode material. The mass proportion of the cladding layer to the whole material was 1wt%, and the mass proportion of the filler to the whole cladding layer was 7wt%.

### Embodiment 2

A PEG/anhydrous ethanol solution was formulated according to a concentration of 2w/v%, LiNbO₃ was blended with the bare NCM9255 positive electrode material at a concentration of 500 ppm to form a LiNbO₃-cladded NCM9255 positive electrode material. The LiNbO₃-cladded NCM9255 positive electrode material was added into the PEG/anhydrous ethanol solution with a solid-to-liquid mass volume ratio of 1:1, stirred evenly and then spray-dried (air inlet temperature 180°C, air outlet temperature 80°C) to obtain a LiNbO₃/PEG-cladded NCM9255 positive electrode material. The mass proportion of the cladding layer to the whole material was 2wt%, and the mass proportion of the filler to the whole cladding layer was 2.5wt%.

### Embodiment 3

A PAN/DMF solution was formulated according to a concentration of 5w/v%, SrTiO₃ was blended with the bare NCM9255 positive electrode material at a concentration of 5000 ppm to form a SrTiO₃-cladded NCM9255 positive electrode material. The SrTiO₃-cladded high-nickel NCM positive electrode material was added into the PAN/DMF solution with a solid-to-liquid mass volume ratio of 1:1, stirred evenly and then spray-dried (air inlet temperature 180°C, air outlet temperature 80°C) to obtain a SrTiO₃/PAN-cladded high-nickel NCM positive electrode material. The mass proportion of the cladding layer to the whole material was 5wt%, and the mass proportion of the filler to the whole cladding layer was 10wt%.

### Embodiment 4

The difference from Embodiment 1 is that the concentration of PVDF-HFP was adjusted to 0.5w/v%, and BaTiO₃ was blended with the bare NCM811 positive electrode material at a concentration of 350 ppm to form a BaTiO₃₋cladded NCM811 material, so that the mass proportion of the cladding layer to the whole material was reduced to 0.5wt%. The others remained unchanged.

### Embodiment 5

The difference from Embodiment 1 is that the amount of BaTiO₃ was adjusted to 500 ppm, so that the mass content of BaTiO₃ in the cladding layer was 5%, and the others remained unchanged.

### Embodiment 6

The difference from Embodiment 1 is that the amount of BaTiO₃ was adjusted to 200 ppm, so that the mass content of BaTiO₃ in the cladding layer was 2%, and the others remained unchanged.

### Embodiment 7

The difference from Embodiment 1 is that the amount of BaTiO₃ was adjusted to 100 ppm, so that the mass content of BaTiO₃ in the cladding layer was 1%, and the others remained unchanged.

### Embodiment 8

The difference from Embodiment 1 is that the amount of BaTiO₃ was adjusted to 1500 ppm, so that the mass content of BaTiO₃ in the cladding layer was 15%, and the others remained unchanged.

### Embodiment 9

A PVDF-HFP/NMP solution was formulated according to a concentration of 1w/v%, BaTiO₃ was blended with the bare NCM811 positive electrode material at a concentration of 700 ppm to form a BaTiO₃-cladded NCM811 material. The BaTiO₃-cladded NCM811 material was added into the PVDF-HFP/NMP solution with a solid-to-liquid mass volume ratio of 1:1, stirred evenly and then dried at 80°C for 24 h. The dried material was crushed to obtain a BaTiO₃/PVDF-HFP-cladded high-nickel NCM positive electrode material. The mass proportion of the cladding layer to the BaTiO₃/PVDF-HFP-cladded high-nickel NCM positive electrode material was 1wt%, and the mass proportion of BaTiO₃ to the cladding layer was 7wt%.

### Embodiment 10

The difference from Embodiment 1 is that PEO was used to replace PVDF-HFP, and the others remained unchanged.

### Embodiment 11

The difference from Embodiment 1 is that PMMA was used to replace PVDF-HFP, and the others remained unchanged.

### Embodiment 12

The difference from Embodiment 1 is that PVDF-TrFE was used to replace PVDF-HFP, and the others remained unchanged.

### Embodiment 13

The difference from Embodiment 1 is that PVDF-CTFE was used to replace PVDF-HFP, and the others remained unchanged.

### Embodiment 14

The difference from Embodiment 1 is that SrTiO₃ was used to replace BaTiO₃, and the others remained unchanged.

### Embodiment 15

The difference from Embodiment 1 is that the amount of PVDF-HFP was adjusted to 5wt%, the amount of BaTiO₃ was 3500 ppm, so that the content of the cladding layer was 5%, and the others remained unchanged.

### Embodiment 16

The difference from Embodiment 1 is that the amount of PVDF-HFP was adjusted to 7wt%, the amount of BaTiO₃ was 4900 ppm, so that the content of the cladding layer was 7%, and the others remained unchanged.

### Embodiment 17

The difference from Embodiment 1 is that the spray drying air inlet temperature was changed to 130°C, the air outlet temperature was changed to 60°C, and the others remained unchanged.

### Embodiment 18

The difference from Embodiment 1 is that the spray drying air inlet temperature was changed to 220°C, the air outlet temperature was changed to 110°C, and the others remained unchanged.

### Embodiment 19

The difference from Embodiment 1 is that the spray drying air inlet temperature was changed to 80°C, the air outlet temperature was changed to 30°C, and the others remained unchanged. Due to the low spray-drying temperature, the resulting modified positive electrode material had slight agglomeration.

### Embodiment 20

The difference from Embodiment 1 is that the spray drying air inlet temperature was changed to 260°C, the air outlet temperature was changed to 160°C, and the others remained unchanged.

### Embodiment 21

The difference from Embodiment 1 is that the D_{V50} of the bare NCM811 positive electrode material used was about 2 µm.

### Embodiment 22

The difference from Embodiment 1 is that the D_{V50} of the BaTiO₃ used was about 5 nm.

### Embodiment 23

The difference from Embodiment 1 is that the D_{V50} of the BaTiO₃ used was about 60 nm.

### Embodiment 24

The difference from Embodiment 1 is that the D_{V50} of the BaTiO₃ used was about 100 nm.

### Embodiment 25

The difference from Embodiment 1 is that the D_{V50} of the BaTiO₃ used was about 150 nm.

### Tests

### 1) Content of impurity lithium

A Metrohm automatic potentiometric titrator-905 was used to test the content of impurity lithium of the positive electrode materials or modified positive electrode materials obtained in the embodiments and comparative embodiments according to GB/T 9736-2008, and the results are recorded in Table 1.

### 2) Morphology and thickness of cladding layer, and particle size of cladded positive electrode material

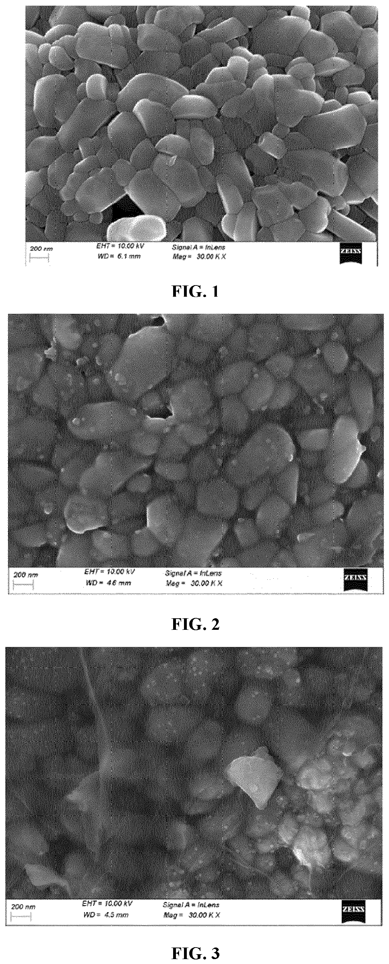

The field emission scanning electron microscope (Sigma300) of ZEISS, Germany, transmission electron microscope (TECNAI G2 F20 STWIN) and laser particle size analyzer (GB/T 19077.1-2016/ISO 13320:2009 (particle size distribution laser diffraction method)) were used to test the materials obtained in the embodiments. The test results of the morphology and thickness of the cladding layer, the D_{V50} particle size of the ferroelectric ceramic material, and the D_{V50} particle size of the obtained positive electrode material are recorded in Table 1. The Scanning Electron Microscopy images obtained for Comparative Embodiment 1, Comparative Embodiment 3, Embodiment 9, Embodiment 1 and Embodiment 4 are shown in Figs. 1 to 5 in sequence.

### 3) Cladding layer content, ferroelectric ceramic material content

Quantitative analysis of the polymer film was carried out by thermogravimetric analysis (PETGA-7) at a heating rate of 10°C/min in air atmosphere. Elemental analysis was performed by inductively coupled plasma emission spectrometry (Thermo Fisher Scientific) to obtain the ferroelectric ceramic cladding content.

### 4) Button battery preparation and performance test

[Positive electrode plate] The positive electrode active material obtained as above, polyvinylidene fluoride (PVDF), and acetylene black in a weight ratio of 90:5:5 were added to NMP, and stirred in a drying room to prepare a slurry. The slurry was coated on an aluminum foil, dried and cold-pressed to form a positive electrode plate. The coating amount was 0.01 g/cm² and the compacted density was 3.5 g/cm³.

[Negative electrode plate] A 0.5 mm lithium metal sheet was used as the negative electrode plate.

[Electrolyte solution] Ethylene carbonate (EC), ethyl methyl carbonate (EMC) and diethyl carbonate (DEC) were mixed in a volume ratio of 1:1:1, and then LiPF₆ was uniformly dissolved in the above solution to obtain an electrolyte solution, wherein the concentration of LiPF₆ was 1 mol/L.

### [Separator]

The separator was model cellgard 2400 purchased from Cellgard.

The positive electrode plate, negative electrode plate, separator and electrolyte solution prepared as above were assembled into a CR2032 button battery (hereinafter also referred to as "button battery") in a button battery box.

### Test of initial gram capacity and initial efficiency of button battery

At 2.8-4.3 V, the button battery was charged to 4.3V at 0.1C, and then charged at a constant voltage of 4.3V until the current was ≤0.05 mA, left to stand for 2 min. The charge capacity at this time was recorded as C0. Then, the battery was discharged at 0.1C to 2.8V. The discharge capacity at this time was the initial gram capacity, recorded as D0. The initial efficiency was calculated according to D0/C0*100%.

### The results are shown in Table 2.

### 5) Full battery fabrication

[Positive electrode plate] The positive electrode active material obtained as above, acetylene black and polyvinylidene fluoride (PVDF) were uniformly mixed in a weight ratio of 94:3:3 in a N-methylpyrrolidone solvent system, and then coated on an aluminum foil, oven-dried, and cold pressed to obtain a positive electrode plate. The coating amount was 0.02 g/cm² and the compacted density was 3.5 g/cm³.

[Negative electrode plate] The negative electrode active materials artificial graphite, hard carbon, conductive agent acetylene black, binder styrene-butadiene rubber (SBR), thickener sodium carboxymethyl cellulose (CMC-Na) in a mass ratio of 90:5:2:2:1 were uniformly mixed in the solvent deionized water, and then coated on a copper foil, oven dried, and cold pressed to obtain a negative electrode plate. The coating amount was 0.015 g/cm² and the compacted density was 1.6 g/cm³.

[Electrolyte solution] Ethylene carbonate (EC), ethyl methyl carbonate (EMC) and diethyl carbonate (DEC) were mixed in a volume ratio of 1:1:1, and then LiPF₆ was uniformly dissolved in the above solution to obtain an electrolyte solution, wherein the concentration of LiPF₆ was 1 mol/L.

### [Separator] A PE porous polymer film was used as the separator.

The above-mentioned positive electrode plate, separator and negative electrode plate were stacked in sequence, so that the separator was located between the positive electrode plate and the negative electrode plate for separation, and they were wound to obtain a bare battery cell. The bare battery cell was placed in an outer package, injected with the electrolyte solution and encapsulated, to obtain a full battery. The length × width × height of the full battery = 90 mm × 30 mm × 60 mm, and the group margin of the battery was 91.0%.

The full battery was tested for its capacity at 1/3C, tested for its 25°C/45°C cycling at 1C/1C, and tested for its gas evolution trend at 70°C.

### Full battery initial gram capacity test

In a constant temperature environment of 25°C, the battery was left to stand still for 5 min, discharged to 2.8V at 1/3C, left to stand still for 5 min, charged to 4.25V at 1/3C, then charged at a constant voltage of 4.25V to a current ≤ 0.05C, left to stand still for 5 min, and then discharged to 2.8V at 1/3C. The discharge capacity at this time was the initial gram capacity, recorded as D0. The results are shown in Table 2.

### Full battery capacity retention rate at 25°C

At 25°C, the battery was charged to 4.25 V with a constant current of 1C, then charged with a constant voltage of 4.25 V until the current dropped to 0.05C, and then discharged to 2.8 V with a constant current of 1C to obtain the first-cycle discharge specific capacity (Cd1). The battery was charged and discharged in this way repeatedly until the 300th cycle to obtain the discharge specific capacity of the lithium-ion battery after n cycles, recorded as Cdn. Capacity retention rate = specific discharge capacity after n cycles (Cdn)/first-cycle specific discharge capacity (Cd1). The results are shown in Table 2.

### Full battery capacity retention rate at 45°C

At 45°C, the battery was charged to 4.25 V with a constant current of 1C, then charged with a constant voltage of 4.25 V until the current dropped to 0.05C, and then discharged to 2.8 V with a constant current of 1C to obtain the first-cycle discharge specific capacity (Cd1). The battery was charged and discharged in this way repeatedly until the 300th cycle to obtain the discharge specific capacity of the lithium-ion battery after n cycles, recorded as Cdn. Capacity retention rate = specific discharge capacity after n cycles (Cdn)/first-cycle specific discharge capacity (Cd1). The results are shown in Table 2.

### Test of full battery gas evolution at 70°C

The full battery at 100% state of charge (SOC) was stored at 70°C. The open circuit voltage (OCV) and AC internal resistance (IMP) of the battery cell were measured before, after and during storage to monitor SOC, and the battery cell volume was measured. After every 48 h of storage, the full battery was taken out, left to stand still for 1 h, then tested for OCV and IMP, and then measured for the battery cell volume by the water displacement method after cooling to room temperature. The water displacement method is to first measure the gravity F 1 of the battery cell with a balance that automatically performs unit conversion on the dial data, then place the battery cell completely in deionized water (the density is known to be 1g/cm³), and measure the gravity F2 of the battery cell at this time; the buoyant force Fb on the battery cell is F 1-F2, and then calculate according to Archimedes' principle Fb = ρgV_displacement to obtain the battery cell volume V = (F1-F2) / ρg. After the volume was tested each time, the battery cell was recharged, that is, it was charged with a constant current of 1C to 4.25 V, and then charged with a constant voltage of 4.25 V until the current dropped to 0.05C. After the recharge was completed, the battery cell was put into the furnace to continue testing. After 30 days of storage, the battery cell volume was measured and the increase in the battery cell volume after storage (that is, the gas evolution) relative to the battery cell volume before storage was calculated. The test results are recorded in Table 2.

### 6) Ionic diffusion coefficient

The charge transfer impedance after 300 cycles at room temperature was measured using the AC impedance method (CHI604D impedance analyzer, amplitude voltage 5 mV, frequency range 10⁻²-10⁵ Hz), the lithium ion diffusion coefficient (D_{(Li+)}) was calculated using the following formula, and the test results are recorded in Table 2.

D_{(Li+)} = RT/nFR_{ct}, where Rct is the charge transfer impedance, F is the Faraday resistance constant, T is the absolute temperature, n is the number of electrons gained and lost, and R is the gas constant.

**Table 1**

| | Polymer electrolyte | Cladding layer content | Cladding layer thickness | Ferroelectric ceramic material | Ferroelectric ceramic material D_{V50} | Ferroelectric content | Modified positive electrode DV50 | Phase state |
|---|---|---|---|---|---|---|---|---|
| Comparative Embodiment 1 | -- | -- | -- | -- | -- | | -- | -- |
| Comparative Embodiment 2 | PVDF-HFP | 2% | 30nm | -- | -- | -- | ~9µm | -- |
| Comparative Embodiment 3 | -- | -- | -- | BaTiO₃ | 40nm | 100% | ~9µm | -- |
| Comparative Embodiment 4 | PVDF-HFP | 1% | 20nm | Al₂O₃ | 40nm | 15% | ~9µm | O-3 |
| Embodiment 1 | PVDF-HFP | 1% | 20nm | BaTiO₃ | 40nm | 7% | ~9µm | O-3 |
| Embodiment 2 | PEG | 2% | 30nm | LiNbO₃ | 50nm | 2.5% | ~9µm | O-3 |
| Embodiment 3 | PAN | 5% | 40nm | LiNbO₃ | 50nm | 10% | ~9µm | O-3 |
| Embodiment 4 | PVDF-HFP | 0.5% | 5nm | BaTiO₃ | 40nm | 7% | ~9µm | O-3 |
| Embodiment 5 | PVDF-HFP | 1% | 20nm | BaTiO₃ | 40nm | 5% | ~9µm | O-3 |
| Embodiment 6 | PVDF-HFP | 1% | 20nm | BaTiO₃ | 40nm | 2% | ~9µm | O-3 |
| Embodiment 7 | PVDF-HFP | 1% | 20nm | BaTiO₃ | 40nm | 1% | ~9µm | O-3 |
| Embodiment 8 | PVDF-HFP | 1% | 20nm | BaTiO₃ | 40nm | 15% | ~9µm | O-3 |
| Embodiment 9 | PVDF-HFP | 1% | 20nm | BaTiO₃ | 30nm | 7% | ~9µm | O-3 |
| Embodiment 10 | PEO | 1% | 20nm | BaTiO₃ | 40nm | 7% | ~9µm | O-3 |
| Embodiment 11 | PMMA | 1% | 20nm | BaTiO₃ | 40nm | 7% | ~9µm | O-3 |
| Embodiment 12 | PVDF-Trfe | 1% | 20nm | BaTiO₃ | 40nm | 7% | ~9µm | O-3 |
| Embodiment 13 | PVDF-CTFE | 1% | 20nm | BaTiO₃ | 40nm | 7% | ~9µm | O-3 |
| Embodiment 14 | PVDF-HFP | 1% | 20nm | SrTiO₃ | 60nm | 7% | ~9µm | O-3 |
| Embodiment 15 | PVDF-HFP | 5% | 40 | BaTiO₃ | 40nm | 7% | ~9µm | O-3 |
| Embodiment 16 | PVDF-HFP | 7% | 45 | BaTiO₃ | 40nm | 7% | ~9µm | O-3 |
| Embodiment 17 | PVDF-HFP | 1% | 40nm | BaTiO₃ | 40nm | 7% | ~9µm | O-3 |
| Embodiment 18 | PVDF-HFP | 1% | 40nm | BaTiO₃ | 40nm | 7% | ~9µm | O-3 |
| Embodiment 19 | PVDF-HFP | 1% | 40nm | BaTiO₃ | 40nm | 7% | ~13µm | O-3 |
| Embodiment 20 | PVDF-HFP | 1% | 40nm | BaTiO₃ | 40nm | 7% | ~9µm | O-3 |
| Embodiment 21 | PVDF-HFP | 1% | 40nm | BaTiO₃ | 40nm | 7% | ~2µm | O-3 |
| Embodiment 22 | PVDF-HFP | 1% | 30nm | BaTiO₃ | 5nm | 7% | ~9µm | O-3 |
| Embodiment 23 | PVDF-HFP | 1% | 20nm | BaTiO₃ | 60nm | 7% | ~9µm | O-3 |
| Embodiment 24 | PVDF-HFP | 1% | 20nm | BaTiO₃ | 100nm | 7% | ~9µm | O-3 |
| Embodiment 25 | PVDF-HFP | 1% | 20nm | BaTiO₃ | 150nm | 7% | ~9µm | O-3 |

**Table 2**

| | Impurity lithium/p pm | Capacity of button battery at 0.1C/(mAh/ g) | Initial efficiency/ % | Capacity of full battery at 1/3 G(m Ah/g) | 300 cycles at 25°C/% | D_{(Li+)}/ ( S/cm² ) | 300 cycles at 45°C/ % | 70°C @30 days gas evolution /(mL/Ah) |
|---|---|---|---|---|---|---|---|---|
| Comparative Embodiment 1 | 1292 | 211 | 92 | 203 | 84.4 | 2.07×1 0⁻¹³ | 77.6 | 21.61 |
| Comparative Embodiment 2 | 714 | 208 | 88.4 | 201 | 93.7 | 3.62×1 0⁻¹² | 90.6 | 7.4 |
| Comparative Embodiment 3 | 1173 | 210 | 88.7 | 201 | 86 | 1.8×10⁻¹³ | 78.5 | 20.8 |
| Comparative Embodiment 4 | 959 | 203 | 89.1 | 196 | 92.8 | 9.47×1 0⁻¹² | 89.7 | 6.3 |
| Embodiment 1 | 936 | 210 | 92.2 | 204 | 94.6 | 6.2×10⁻¹¹ | 92.1 | 5.24 |
| Embodiment 2 | 704 | 228 | 91 | 221 | 95.3 | 4.33×1 0⁻¹¹ | 92 | 4.7 |
| Embodiment 3 | 685 | 226 | 90.2 | 220 | 95.7 | 3.46×1 0⁻¹¹ | 93.1 | 4.9 |
| Embodiment 4 | 1005 | 213 | 90.8 | 206 | 92.5 | 2.72×1 0⁻¹¹ | 90.3 | 14.8 |
| Embodiment 5 | 997 | 209 | 91.4 | 203 | 94 | 5.78×1 0⁻¹¹ | 92.3 | 5.03 |
| Embodiment 6 | 954 | 207 | 91.7 | 201 | 94.4 | 4.13×1 0⁻¹¹ | 92 | 5.12 |
| Embodiment 7 | 967 | 206 | 90.5 | 200 | 94 | 3.09×1 0⁻¹¹ | 91.4 | 5.07 |
| Embodiment 8 | 1096 | 205 | 92.7 | 198 | 90.3 | 9.88×1 0⁻¹¹ | 88.3 | 10.1 |
| Embodiment 9 | 1048 | 212 | 92.0 | 205 | 93.8 | 6.08×1 0⁻¹¹ | 91.5 | 9.2 |
| Embodiment 10 | 904 | 208 | 90.8 | 199 | 94.2 | 5.54×1 0⁻¹¹ | 91.7 | 5.31 |
| Embodiment 11 | 895 | 211 | 93 | 203 | 94.6 | 7.29×1 0⁻¹¹ | 92 | 5.17 |
| Embodiment 12 | 927 | 210 | 92.7 | 203 | 94.3 | 6.53×1 0⁻¹¹ | 92.6 | 5.47 |
| Embodiment 13 | 942 | 209 | 92.4 | 202 | 94.4 | 6.28×1 0⁻¹¹ | 91.9 | 5.63 |
| Embodiment 14 | 937 | 211 | 92.4 | 200 | 93.7 | 6.73×1 0⁻¹¹ | 92.2 | 5.3 |
| Embodiment 15 | 426 | 205 | 89.7 | 198 | 95.6 | 3.79×1 0⁻¹¹ | 93.1 | 4.2 |
| Embodiment 16 | 414 | 203 | 89.2 | 196 | 96 | 1.17×1 0⁻¹¹ | 94.2 | 3.74 |
| Embodiment 17 | 972 | 210 | 92.1 | 202 | 94.5 | 5.8×10⁻¹¹ | 92.1 | 5.25 |
| Embodiment 18 | 914 | 211 | 92.2 | 203 | 94.6 | 6.3×10⁻¹¹ | 92.3 | 5.21 |
| Embodiment 19 | 993 | 210 | 91.7 | 201 | 93.8 | 5.6×10⁻¹¹ | 91.6 | 5.32 |
| Embodiment 20 | 936 | 207 | 91.2 | 198 | 94.6 | 6.1×10⁻¹¹ | 91.7 | 5.22 |
| Embodiment 21 | 935 | 212 | 93.4 | 204 | 94.5 | 6.2×10⁻¹¹ | 91.8 | 7.23 |
| Embodiment 22 | 946 | 210 | 92.1 | 202 | 94.2 | 6.5×10⁻¹¹ | 91.7 | 5.27 |
| Embodiment 23 | 933 | 206 | 91.5 | 199 | 94.1 | 6.1×10⁻¹¹ | 91.8 | 5.21 |
| Embodiment 24 | 941 | 201 | 91.1 | 197 | 93.9 | 5.7×10⁻¹¹ | 91.3 | 5.33 |
| Embodiment 25 | 945 | 201 | 89.4 | 197 | 93.2 | 5.1×10⁻¹¹ | 90.7 | 5.34 |

Comparative analysis of samples prepared in the comparative embodiments 1 and 3 and embodiments 1, 4, and 9 by Scanning Electron Microscopy shows that the ferroelectric ceramic cladding alone can form island-shaped cladding on the surface of the positive electrode material, and composite polymer electrolyte cladding can form a uniform film-like cladding layer on the surface of the positive electrode material; and the continuity of the film becomes better with the increase of the polymer cladding amount.

Through the comparative analysis of the impurity lithium data of the samples prepared in Comparative Embodiments 1-3 and the Embodiments, it can be seen that due to the existence of the film-like cladding layer, H₂O and CO₂ are isolated to a certain extent, thereby reducing the NCM impurity lithium. Also, the better the continuity of the film, the lower the amount of impurity lithium, which in turn can increase capacity, improve cycling performance, and reduce gas evolution.

By comparing the cycle effects of samples prepared in Comparative Embodiment 4 and Embodiments 1-4, the interaction between Al₂O₃ and the polymer electrolyte is weak, which has a limited effect on improving the ion transport capacity of the cladding layer; and Al₂O₃ is an inactive material, an insulator of electrons and ions, which will cause a decrease in capacity.

Through the comparative analysis of the performance data of the samples prepared in Embodiments 1, 4, 15 to 16, it can be seen that the continuous composite polymer electrolyte cladding layer with a moderate thickness is conducive to increasing the cycles and suppressing gas evolution. If the cladding layer is not continuous, the positive electrode material will be still exposed to the electrolyte solution, and if the cladding layer is too thick, it will inhibit electron transport. Under a reasonable cladding amount, the prepared positive electrode material has higher capacity, better cycling performance, and less gas evolution, indicating that the material has higher structural stability.

By comparing the performance data of the samples of Embodiment 1 and Embodiments 22 to 25, it can be seen that the particle size of BaTiO₃ also influences the capacity and cycling performance. When the particle size is too large in Embodiment 25, the effect of improving the crystallinity of the polymer electrolyte is not obvious, resulting in insufficient improvement of the rate performance of the positive electrode material.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A modified positive electrode material, wherein the modified positive electrode material includes an inner core and a cladding layer, the inner core is a positive electrode material, the cladding layer includes a polymer electrolyte body and a ferroelectric ceramic material dispersed in the polymer electrolyte body.

2. The modified positive electrode material according to claim 1, wherein the mass of the cladding layer is 0.5wt%-5wt% of the mass of the modified positive electrode material, optionally, the mass content of the ferroelectric ceramic material in the cladding layer is 2%-10%, further optionally 2%-7%.

3. The modified positive electrode material according to claim 1 or 2, wherein the ionic diffusion coefficient of the modified positive electrode material is 10⁻¹¹-10⁻¹⁰ S/cm², optionally, the polymer electrolyte body is one or more selected from the group consisting of polyethylene oxide, polyethylene glycol, polymethyl methacrylate, polyacrylonitrile, polyvinylidene fluoride, vinylidene fluoride-trifluoroethylene copolymer, vinylidene fluoride-hexafluoropropylene copolymer, and vinylidene fluoride-chlorotrifluoroethylene copolymer.

4. The modified positive electrode material according to any one of claims 1 to 3, wherein the weight average molecular weight of the polymer electrolyte body is 1500 to 800000.

5. The modified positive electrode material according to any one of claims 1 to 4, wherein the ferroelectric ceramic material has the general formula: XYO₃, where X is one or more selecting from the group consisting of Li⁺, Na⁺, K⁺, Mg²⁺, Ca²⁺, Sr²⁺, Pb²⁺, Ba²⁺ and La²⁺, Y is one or more selecting from the group consisting of Ti⁴⁺, Zr⁴⁺, V⁵⁺, Nb⁵⁺ and Ta²⁺; optionally, X is one or more selecting from the group consisting of Li⁺, Sr²⁺, Pb²⁺ and Ba²⁺, and Y is Ti⁴⁺ and/or Nb⁵⁺.

6. The modified positive electrode material according to any one of claims 1 to 5, wherein the D_{V50} particle size of the ferroelectric ceramic material is 5 nm to 100 nm, optionally the D_{V50} particle size of the ferroelectric ceramic material is 5 nm to 60 nm.

7. The modified positive electrode material according to any one of claims 1 to 6, wherein the thickness of the cladding layer is 2 nm to 40 nm, and optionally, the D_{V50} particle size of the modified positive electrode material is 2 µm to 10 µm.

8. The modified positive electrode material according to any one of claims 1 to 7, wherein the positive electrode material is any one or more selected from the group consisting of layered positive electrode materials, lithium-rich manganese-based positive electrode materials, spinel lithium manganese nickel oxide positive electrode materials, and conversion positive electrode materials; optionally, the phase state of the positive electrode material is O-3 phase.

9. A preparation method of the modified positive electrode material according to any one of claims 1 to 8, wherein the preparation method comprises:
step S1, preparing a solution of a polymer electrolyte;
step S2, mixing a ferroelectric ceramic material with a positive electrode material to obtain the positive electrode material cladded with the ferroelectric ceramic material; and
step S3, mixing and drying the solution of the polymer electrolyte and the positive electrode material coated with the ferroelectric ceramic material to obtain the modified positive electrode material.

10. The preparation method according to claim 9, wherein the mass sum of the polymer electrolyte, the positive electrode material and the ferroelectric ceramic material is W1, the mass of the polymer electrolyte is W2, the mass of the ferroelectric ceramic material is W3, and W2/W1 is between 0.5wt% and 5wt%; optionally, W3/(W2+W3) is between 2% and 10%, optionally between 2% and 5%.

11. The preparation method according to claim 1, wherein the mass content of the polymer electrolyte in the polymer electrolyte solution is 0.5%-10%, optionally, the solvent used in the polymer electrolyte solution is one or more selected from the group consisting of absolute ethanol, N-methylpyrrolidone (NMP), and N,N-dimethylformamide (DMF).

12. The preparation method according to claim 1, wherein the drying in the step S3 is spray drying, optionally, the air inlet temperature of the spray drying is 130°C-220°C, and the air outlet temperature of the spray drying is 60°C-80°C.

13. A positive electrode plate, comprising a positive electrode current collector and a positive electrode film layer disposed on at least one surface of the positive electrode current collector, wherein the positive electrode film layer comprises a positive electrode active material, the positive electrode active material includes the modified positive electrode material according to any one of claims 1 to 8; optionally, based on the total weight of the positive electrode film layer, the content of the modified positive electrode material in the positive electrode film layer is more than 70wt%, optionally 80wt%-90wt%.

14. A secondary battery, comprising the modified positive electrode material according to any one of claims 1 to 8 or the positive electrode plate according to claim 13.

15. A battery module comprising a secondary battery, wherein the secondary battery is the secondary battery according to any one of claim 14.

16. A battery pack comprising a battery module, wherein the battery module is the battery module according to claim 15.

17. An electrical apparatus comprising a secondary battery, or a battery module or a battery pack, wherein the secondary battery is selected from the secondary battery according to claim 14, the battery module is the battery module according to claim 15, or the battery pack is the battery pack according to claim 16.
